# EUROPEAN PATENT SPECIFICATION

(11) **EP 0 498 249 B1**
(45) Date of publication and mention of the grant of the patent: **26.08.1998**
(21) Application number: 92101256.3
(22) Date of filing: 27.01.1992
(51) Int. Cl.: B29C 61/06

(54) **Process for producing shrink film and resultant shrink film layers and laminates**
Verfahren zur Herstellung von schrumpfbaren Folien und so hergestellte schrumpfbare Folien und Laminate
Procédé pour la fabrication de films rétractables et films rétractables et stratifiés ainsi obtenus

(30) Priority: 07.02.1991 US 651966
(43) Date of publication of application: 12.08.1992
(73) Proprietor: HERCULES INCORPORATED, Wilmington, Delaware 19894-0001 (US)
(72) Inventor: Anderson, Harry Sutton, II, Elkton, Maryland 21921 (US); Ristey, William Jerome, Berwyn, Pennsylvania 19312 (US); Senich, George Albert, Malvern, Pennsylvania 19355 (US)
(74) Representative: Vogeser, Werner, Dipl.-Ing.

(56) References cited:
- EP-A- 95 942
- EP-A- 204 843
- EP-A- 267 799
- EP-A- 299 750
- EP-A- 321 964
- EP-A- 348 749
- EP-A- 349 960
- EP-A- 477 742
- DE-A- 2 057 255
- DATABASE WPIL Week 26, Derwent Publications Ltd., London, GB; AN 89-188784 & JP-A-1 127 317 (KOHJIN) 19 May 1989

## Description

The present invention is directed to processes for producing shrink films having high unidirectional shrinkage and resultant shrink films; processes of using such shrink films to produce laminates and resultant laminates of such shrink films and processes for using such shrink films and laminates to package and/or label articles, and resultant articles to which such shrink film or laminates of such shrink film are applied. More specifically the present invention is directed to the previously mentioned embodiments with respect to utilizing oriented polymer films, i.e., oriented polypropylene (OPP) films, to produce polyolefin shrink films and laminates having high unidirectional shrinkage which are particularly advantageous in labeling articles, such as beverage containers, having irregular shapes.

A distinguishing characteristic of shrink film is its capacity, upon exposure to some level of heat, to shrink or, if restrained, to create shrink tension within the film. When such a shrink film is used in a process to label or wrap a container, and then is subjected to a heat history, this process causes the film to shrink around the product producing a tight, transparent or opaque, wrapping that conforms to the contour of the article and provides useful functions required of label or packaging materials.

The ability of a film to shrink upon exposure to some level of heat arises from the orientation of the film during manufacture. During film manufacture, the films are usually heated to their orientation temperature range, which varies with the different polymers used for the films, but is usually above room temperature and below the melting temperature of the polymer. The film is then stretched in the cross or transverse direction (TD) and in the longitudinal or machine direction (MD) to orient it. After being stretched, the film is rapidly cooled to quench it, thus freezing the film in its oriented state. Upon heating, the orientation stresses are relaxed and the film will begin to shrink back to its original, unoriented dimension.

The polyvinyl chloride (PVC), polystyrene, polyester, and polyolefin families of shrink films provide a wide range of physical and performance film characteristics. Film characteristics play an important role in the selection of a particular film and may differ for each type of packaging or labeling application.

Polyolefins have been most successful with applications where moderate to high shrink forces are preferred. Polyolefin films are also used on automatic, high speed shrink wrapping equipment where shrink and sealing temperature ranges are more clearly controlled. Polyolefin films are particularly suitable for this application because polyolefin films tend to be cleaner, leaving fewer deposits and less residue, which extend the life of the equipment as well as reducing equipment maintenance. The PVC films generally have lower shrink forces, and will seal and shrink over much broader temperature ranges than the polyolefins. A drawback to PVC films, however, is their tendency to emit noxious gases upon heat sealing and upon combusting during incineration, resulting in corroded machinery as well as a health hazard.

Relevant prior art is US-A-4,190,168; US-A-5,234,733; US-A-5,292,561; and Japanese Kokai Nos. 49-86,459; 58-119,827; 59-9,030; 57-105,351.

From EP-A-0204843 a low temperature shrinkable film and a process for its production is known whereby the known film exhibits differing shrink properties in the M and T directions. In the known process for making a biaxially oriented polymer shrink film a MD reorientation mechanical MD/TD ratio between about 3.0 and about 6.0 is derivable. From said document also at least at 30% shrinkage in the MD and at most 5% shrinkage in the TD at 90°C is known.

The main difference between said document and the present application is that said document does not remotely suggest just forming a film having the MD/TD shrink characteristics specified in the present polymers claimed and no specific teaching can be derived that the film being strechted in the MD-direction is a biaxially oriented polymer film of the types specified in the claims.

The present invention is directed to a process for making a biaxially oriented polymer shrink film which involves selecting a biaxially oriented polymer film of a specific polymer subjecting said biaxially oriented polymer film to processing conditions and temperature effective to produce biaxially oriented polymer shrink films having thermal shrink properties including shrinkage in the machine direction of the film and transverse direction of the film as a function of the MD reorientation mechanical MD/TD draw ratio, wherein such conditions preferably include an MD reorientation mechanical MD/TD draw ratio between about 1.01 and about 7.5 and a corresponding line speed comprising an input roll speed within the range of about 60.96 m/min (200 ft/min) to about 457.2 m/min (1,500 ft/min) and an output roll speed within the range of about 61.26 m/min (201 ft/min) to about 457.5 m/min (1,501 ft/min) wherein the MD reorientation mechanical MD/TD draw ratio is preferably between about 1.10 and 2.00 and the corresponding input roll speed preferably is within the range of about 228.6 m/min (750 ft/min) to about 259.1 m/min (850 ft/min), and the output roll speed preferably is within the range of about 285 m/min (935 ft/min) to about 457.2 m/min (1500 ft/min), and most preferably wherein the input roll speed is about 243.8 m/min (800 ft/min) and the output roll speed is within the range of about 335.3 m/min (1100 ft/min) to about 396.2 m/min (1300 ft/min).

According to the present invention a biaxially oriented polymer film is subjected to processing conditions and temperatures effective to produce biaxially oriented polymer shrink films having thermal shrink properties including shrinkage in the machine direction of the film and transverse direction of-the film as a function of temperature, wherein the processing temperature is within the range of about 70°C to about 160°C, preferably within a range of about 90°C to about 130°C, and more preferably within the range of about 100°C to about 120°C.

According to the present invention the biaxially oriented film is heated to a temperature within the temperature range of 100°C to 151°C; drawing the heated biaxially oriented film-under conditions effective to extend the heated biaxially oriented film at least 1.10 times its original length in the machine direction; and cooling the drawn film while the film is still under tension, whereby a shrink film is produced with thermal shrinkage properties being a function of temperature.

According to the present invention a laminate film is producable by forming a plurality of oriented polymer films into a laminate comprising at least one polymer shrink film having an imbalance of shrinkage consisting essentially of a machine direction (MD) shrinkage greater than a transverse direction (TD) shrinkage, wherein the MD shrinkage and the TD shrinkage are functions of temperature as follows:

| Shrinkage MD (%) | Shrinkage TD (%) | Shrink Test Temperature °C |
|---|---|---|
| 4 to 15 | -6 to 5 | 100 |
| 6 to 25 | -8 to 7 | 110 |
| 10 to 30 | -10 to 10 | 120 |
| 12 to 40 | -12 to 15 | 130 |
| 20 to 40 | -15 to 15 | 140 |
| 20 to 40 | -20 to 15 | 150; |

and wherein the biaxially oriented shrink film exhibits tensile properties selected from the group consisting of:
Modulus
   - MD, kg/cm² (psi): 24.6x10³ - 59.8x10³ (350,000-850,000)
   - TD, kg/cm² (psi): 7.03x10³ - 35.2x10³ (100,000-500,000)
Tensile Strength
   - MD, kg/cm² (psi): 2.11x10³ - 3.52x10³ (30,000-50,000)
   - TD, kg/cm² (psi): 1.05x10³ - 2.46x10³ (15,000-35,000)
Ultimate Elongation
   - MD, %: 20-120
   - TD, %: 50-250.

According to the present invention the reoriented biaxially oriented film of this invention can be used for packaging an article within the shrink film, by covering at least a portion of an article with the biaxially oriented polymer film; and subjecting the article having at least a portion covered with the biaxially oriented film to heat at a temperature sufficient to shrink the biaxially oriented polymer film around at least the portion of the article, wherein the article has an irregular shape, preferably wherein the article is a container such as a beverage can.

The present invention is also directed to shrink films, laminates of shrink films,, and articles covered at least in part with such shrink films and laminates thereof, wherein the shrink film is composed of a biaxially oriented polymer film consisting of specific polymers having an imbalance of shrinkage consisting essentially of a machine direction (MD) shrinkage greater than a transverse direction (TD) shrinkage such that TD shrinkage is less than or equal to MD/2 and wherein the MD shrinkage is greater than about 15% and the TD shrinkage is less than about 10% at about 140°C. Preferably wherein the MD shrinkage and the TD shrinkage are functions of temperature as follows:

| Shrinkage MD (%) | Shrinkage TD (%) | Shrink Test Temperature °C |
|---|---|---|
| 4 to 15 | -6 to 5 | 100 |
| 6 to 25 | -8 to 7 | 110 |
| 10 to 30 | -10 to 10 | 120 |
| 12 to 40 | -12 to 15 | 130 |
| 20 to 40 | -15 to 15 | 140 |
| 20 to 40 | -20 to 15 | 150. |

The biaxially oriented film of the present invention preferably exhibits tensile properties selected from the group consisting of:
Modulus
   - MD, kg/cm² (psi): 24.6x10³ - 59.8x10³ (350,000-850,000)
   - TD, kg/cm² (psi): 7.03x10³ - 35.2x10³ (100,000-500,000)
Tensile Strength
   - MD, kg/cm² (psi): 2.11x10³ - 3.52x10³ (30,000-50,000)
   - TD, kg/cm² (psi): 1.05x10³ - 2.46x10³ (15,000-35,000)
Ultimate Elongation
   - MD, %: 20-120
   - TD, %: 50-250.

For purposes of the present invention, and particularly for the shrink films, laminates of shrink films, and shrink films and laminates thereof used to label articles in accordance with the present invention, MD shrinkage is greater than about 15% and the TD shrinkage is about 10% at about 140°C, preferably wherein the TD shrinkage is less than about 5%, and more preferably wherein the TD shrinkage is within the range of about -5% to about 5%. The TD shrinkage may also be less than about 2%; in which case, the TD shrinkage is preferably within the range of about -2% to about 2%. Most preferably, the TD shrinkage is about zero, or wherein the biaxially oriented film has substantially zero TD shrinkage. The MD shrinkage is preferably greater than about 25% at 140°C.

For purposes of the present invention, the biaxially oriented film has a minimum draw ratio of less than about 1.4 RD. Preferably the minimum draw ratio is within the range of about 1.01 to 1.4 RD. The biaxially oriented film of the present invention has a film reorientation MD/TD mechanical draw ratio within the range of about 1.01 to about 1.5. Preferably the reorientation MD/TD mechanical draw ratio is within the range of about 1.1 to about 1.37; more preferably, the reorientation MD/TD mechanical draw ratio is within the range of about 1.12 to about 1.35.

For purposes of the present invention, the biaxially oriented film may be selected from the group consisting of clear films and opaque films; the biaxially oriented polymer film may also be selected from the group consisting of monolayer films, multilayer films, coextruded films, extrusion coated films and coated films. The shrink films of the present invention are composed of polyolefins, such as polypropylene. Preferably the biaxially oriented polymer film has a thickness within the range of about 12.7 to about 50.8 µm (50 to about 200 gauge), and more preferably within the range of about 17.78 to about 35.56 µm (70 to about 140 gauge).

Thus, the present invention is directed to polymer shrink films, such as polyolefin films and laminates with unique thermal shrink characteristics. The thermal shrink properties of the novel polymer shrink films and laminates of the present invention differ from conventional oriented polymer films while still maintaining the useful characteristics of oriented polymer film. Thermal shrink properties of the novel polyolefin films of the present invention are characterized by shrinkage in the machine direction (MD) and transverse direction (TD) as a function of temperature.

The present invention is advantageous in that the useful properties common for oriented polyolefin films are maintained while providing thermally shrinkable polyolefin films and laminates which are particularly useful as labeling and packaging materials.

The novel and unique polymer shrink films and laminates of the present invention are particularly suitable for labelling non-uniform contoured articles with a printed single layer of the oriented polymer shrink film or printed laminate of oriented polymer shrink film which, by exposure to a prescribed heat history, shrinks to conform to the contour of the article, such as a beverage container.

For purposes of the present invention, certain requirements for the processes for the polymer shrink film manufacture, lamination of the polymer shrink films, and the container labeling and packaging have been discovered to be important in order to realize the advantages of the present invention.

In this regard, it is critical that the shrink film must manifest a resistance to MD directional alteration in dimension during typical label preparation and application to maintain uniform repeat length and registration as imparted by applied heat/or tension history. The film also must be resistant to MD and/or TD directional lamination curl to maintain uniform lamination flatness. The film should maintain overall web flatness, as exhibited by typical oriented polyolefin films, as well as single web or lamination stiffness as required for conventional printing, laminating, and label-to-container feeding operation.

Another important advantage of the present invention is that the use of a polyolefin based label is inherently more environmentally compatible in the manufacture and recycle process. Current shrink labels are foamed polystyrene and PVC. Foamed polystyrene is inherently environmentally unfriendly due to the use of chlorofluorocarbons (CFCs) in the foaming process, and PVCs are disliked due to the caustic incineration side products, which are eliminated by the present invention.

Figure 1 is a schematic illustration showing a sequential blown film process for making shrink film.

Figure 2 is a schematic illustration showing a sequential tenter film process for making shrink film.

Figure 3 is a schematic illustration showing an out-of-line process for making shrink film.

Figure 4 is a schematic illustration showing a process for making shrink film laminates.

The present invention is based on the discovery of temperature, machine draw parameters and film parameters that allow for control of resultant shrinkage of a polymer film. More particularly, by achieving a balance of temperature, draw ratio, line speed, and oriented polymer film properties, the new process of the present invention is able to produce enhanced machine direction (MD) shrinkage with a very low degree of transverse direction (TD) shrinkage. This balancing of MD and TD shrinkage, particularly in oriented polypropylene (OPP) films, imparts the unique shrink label and packaging characteristics of the present invention.

The MD re-orientation in accordance with the present invention involves placing a conventional OPP polymer film on a series of heated rolls or in an oven and, by keeping the temperature of the heated rolls or oven below the melting temperature of the film, the stress necessary to orient the film is reduced. For example, polypropylene begins to shrink near 100°C and shrinkage continues to increase until melting at greater than about 160°C. The MD re-orientation can take place after the OPP film is produced or, in some cases, the re-orientation can take place in line while the OPP film is being produced. Most polymer products respond to this orientation with an enhanced high temperature shrinkage. The majority of the products' response is in the direction of the imposed strain.

The basic processes for producing polymer films for use in accordance with the present invention to make the novel polymer shrink films may be selected from the group of conventional processes for producing BOPP polymer films, such as the tubular and tenter techniques.

In general, in the tubular or bubble process, molten polymer is extruded from an annular die and then quenched to form a tube. The wall thickness of the tube is controlled partly by the annular die gap and partly by the relative speeds of extrusion and haul-off. The tube passes through slow running nip rolls and is then re-heated to a uniform temperature. Transverse drawing is achieved by increasing the air pressure in the tube, the draw ratio, and/or by adjustments to the volume of entrapped air. The air is trapped by pinch rolls at the end of the bubble remote from the extruder and these are generally run at a faster speed than the first pair, thus causing drawing of the film in the machine direction. The tubular process thus obtains simultaneous transverse and forward orientation.

In the second of the previously mentioned processes, i.e., the tenter process, the polymer is extruded through a slot die and quenched. The extruded sheet is normally oriented in two sequential steps. The first step is usually longitudinal orientation between rolls running at different speeds. In the second stage, the film enters a tenter frame, where it is stretched laterally by means of diverging chains of clips. Whereas the bubble process operates at constant pressure, the tenter frame process operates at a constant rate of elongation. Somewhat higher stretching forces are required in the second stage which may be carried out at slightly higher temperatures. This is mainly due to crystallization of the film during the first stretching operation. The tenter frame process can also be carried out as a simultaneous operation in which an extruded sheet with beaded edges is biaxially oriented in a tenter frame equipped with diverging roller grips for holding and stretching the film.

The tenter or tenter frame operation has the advantage of considerable versatility, producing films with a wide range of shrink properties.

After stretching, polymer orientation is locked into the film by cooling. When the oriented film is subsequently heated up to temperatures in the vicinity of the stretching temperature, the frozen-in stresses become effective and the film shrinks. Strains and stresses which are related to the degree of orientation and the forces which are applied during stretching are thereby recovered.

The polyolefin shrink films of this invention can also exhibit a variety of surface behavior or characteristics common to typical OPP packaging films as is known to the art.

The character of a polymer surface can be changed in several ways. One method is to expose the surface to an energy source, such as a corona discharge, plasma, or an x-ray or electron bombardment. This can be done over a broad temperature range in an inert atmosphere or reactive atmosphere. Depending on the temperature, intensity, rate of application, and frequency of the energy and the nature and concentration of the chemical medium in contact with the surface before, during, and/or after energy application, a wide range of physical and/or chemical modifications of the film surface can be effected.

A second way to change a polymer surface is to cause an internal chemical additive to bloom to the surface by the application or removal of heat from the film. Alternatively, a substance on the surface of the film can be made to migrate inside of the film and away from the surface by the application or removal of heat from the film. The chemical nature of the substance or additive and the time/temperature history to which it is exposed can lead to a wide range of possible surface modifications.

A third way to change a polymer surface is to cause a change in surface morphology by the application of heat and/or pressure to the film. The physical and topological nature of the surface can be altered, for example, by annealing a film and changing the crystalline structure present on the film surface.

The MD re-orientation of biaxially oriented polypropylene film (BOPP) is more complex than for conventional films due at least in part to initial residual stresses placed on the film. For example, in accordance with the present invention, it has been discovered that at a 140°C shrink temperature, BOPP films may shrink 15% in the machine direction (MD) or transverse direction (TD). After this same film is tensilized, 5-30% transverse direction reduction in film width results and 140°C film shrinkage is biased in the MD direction, i.e. 140°C MD shrinkage equals 25% and 140°C TD shrinkage equals 5%.

This is in contrast to prior art procedures wherein polymer strapping, fibers and film can be drawn/tensilized to re-orient and structure to produce properties different from the original product.

For purposes of the present invention, the following procedure, derived from ASTM method D2732-83, which is designed to measure unrestrained linear shrinkage in both the machine and transverse directions, was used for measuring unrestrained linear thermal film shrinkage in a single direction at a time.

A polydimethylsiloxane fluid (0.5 cs) bath is first preheated to desired temperatures within the range of about 100°C to 140°C.

Film samples are precut to 1.27 cm (0.5") x 22 cm and a 20 cm span is marked in the sample center. Ends are left on a sample so the sample can be anchored for immersion. One end of at least three films of each sample is placed in an immersion rack. A 1.2 g metal alligator clip is attached to the free long end of each film strip to keep the film from floating in the bath. The machine direction and the transverse direction are tested for each film. The heater/stirrer is then turned off and the samples on the rack are immersed into the proper temperature bath for a count of five seconds prior to being removed from the liquid. The samples are immediately measured and their shrinkage calculated. For example, with a 20 cm sample span, a shrinkage of 1 mm equals 0.5% shrinkage. The average % shrinkage of all the samples run in one direction (MD or TD) is then recorded for a particular film sample. If there is an elongation rather than a shrinkage, a negative value is reported.

Thermal shrink properties of the novel polymer shrink films of the present invention are characterized by shrinkage in the machine direction (MD) and transverse direction (TD) as a function of temperature. These shrink characteristics are outlined as follows:

| Temperature °C | Shrinkage MD (%) | Shrinkage TD (%) |
|---|---|---|
| 100 | 4 to 15 | -6 to 5 |
| 110 | 6 to 25 | -8 to 7 |
| 120 | 10 to 30 | -10 to 10 |
| 130 | 12 to 40 | -12 to 15 |
| 140 | 20 to 40 | -15 to 15 |
| 150 | 20 to 40 | -20 to 15. |

The unique thermal shrink properties, combined with the orientation/tensile properties of the novel polymer shrink films of the present invention allow for the useful practice of using conventional labeling equipment of the novel films of the present invention.

The tensile properties are characterized as follows:

| UNIQUE TENSILE PROPERTIES OF THIS INVENTION | | | | |
|---|---|---|---|---|
| Property | | Typical OPP | Uniax Shrink Film | BOPP Shrink Film |
| Modulus, psi* | MD | 280,000-350,000 | 50,000 | 350,000-850,000 |
| | TD | 350,000-390,000 | 160,000 | 100,000-500,000 |
| Tensile | MD | 22,000-30,000 | 30,000 | 30,000-50,000 |
| Strength, psi* | TD | 30,000-43,000 | 5,000 | 15,000-35,000 |
| Ultimate | MD | 70-165 | 130 | 20-120 |
| Elongation, % | TD | 30-50 | 1100 | 50-250. |

| | | | | |
|---|---|---|---|---|
| * 1 psi = 0.07 kg/cm² | | | | |

The tensile strength, elongation and modulus were measured using the ASTM D882 test procedure.

The processes of the present invention, as described herein for producing shrink film and resultant shrink film layers and laminates are polymer-based polyolefin films such as polypropylene. In this regard, the polypropylene character of the film is preferably a homopolymer, although copolymers of propylene with minor amounts of ethylene or an alpha-olefin and the respective blends can also be used. Typical commercially available film-forming propylene homopolymers are crystalline or isotactic in their molecular structure and normally have a melt flow rate of about 2 to 10 dg/min. Conventionally, the polypropylene is compounded with conventional additives such as anti-oxidants, light stabilizers, inorganic antacids, such as calcium oxide or magnesium aluminum hydroxide carbonate hydrate in addition to fatty acid amide slip agents.

In accordance with the present invention, the novel polymer shrink films of the present invention can be used as a single web or formed into a laminate, with use as a laminate being particularly beneficial.

For purposes of the present invention, any conventional lamination process may be used inasmuch as the novel polymer shrink film of the present invention has been observed to be capable of being suitably laminated using known technology, e.g., selected from the group consisting of wet bonding, dry bonding, hot melt or wax laminating, extrusion lamination, and thermal or heat laminating; however, dry bonding and thermal or heat laminating are preferred.

Dry bonding involves applying adhesive to one of the films or webs. The solvent is evaporated from the adhesive and the adhesive-coated web is combined with the other web material by heat and pressure or by pressure only.

Thermal laminating brings together coated substrates under heat and pressure. Typically, the webs are heated to the softening point of the coating; however, improved results, e.g. in clarity, are obtained when using preheat rolls and a steam box.

Related to this, labels are normally printed and the printing is expected to be permanent. If the exposed printed surface is abraded, then the printing can be removed or scuffed. If, however, the printing is on the inside surface of a clear film and this clear film is laminated to another film, the printing is protected by the clear film. Alternatively, the printing can be on the inside surface of the clear or opaque web laminated to the clear protective overweb. In addition, the outermost surface of the laminate can be made matte, glossy, of low coefficient of friction, different in surface tension or composition, independent from the nature of the surface required to accept inks. Also, the adhesion of the printed film to a container can be influenced by the presence of ink. For example, a typical failure of a film-to-container bond will occur by separation at the weakest point or at the ink from the film, with no failure of the adhesive. By placing the ink between the layers of a laminated film this weak point is removed, allowing for the adhesive to bond directly from laminate surface to the container. Printing can also be applied to a clear film layer and either a clear or opaque film, or a metallized version of either type of film, can be laminated to the printed web. For the purposes of the present invention, the novel polymer shrink films may be printed using conventional printing techniques including flexographic printing and rotogravure printing.

Flexographic printing procedures typically employ presses selected from the group consisting of stack, central-impression, and in-line presses; flexographic printing which employs a central impression or common impression plate is preferred.

Plate preparation for flexography involves taking the art work through standard engraving procedures to form a zinc plate. At this point, a phenolic resin negative of the zinc plate is made from which the rubber positive of the zinc plate can be formed by standard molding methods using 0.032 cm (0.0125-inch)-thick rubber sheeting formulated for platemaking. Alternately, photosensitive glass and plastics, may be used instead of the zinc plates.

A typical method of mounting the plate employs a pressure sensitive material to adhere the rubber plate to the plate cylinder; vulcanizing the rubber plate to a metal brace that can be clamped around the plate cylinder may also be used for this purpose.

A conventional flexographic press consists of four sections: An unwind station for the web to be printed, a printing section, a drying oven, and a windup for the finished printed web.

The unwind section provides for the mounting of two additional rolls and a flying splice mechanism that allows for automatic splicing of the new roll to the expiring roll going through the press. Similarly, the windup section is provided with multiple windup spindles, usually two, and a mechanism for cutting the web when the roll on one spindle has reached a desired size and for attaching the free end to a core mounted on the second spindle for continuous output.

Web tension has a definite effect on print register and on slit roll quality, and particularly on central-impression flexographic presses, the web should be pulled tight around the central drum to eliminate wrinkles or flatness deficiencies.

Drying is performed with high-velocity hot air generated by gas burners, distribution ducts, and between-color dryers. The latter are a major aid in trapping the ink laid down in one color station before the next color is printed. This prevents the new color from causing the previous color to smear.

Drying temperature should be as high as possible to ensure best solvent removal; however, drying temperature should not be high as to cause film shrinkage. A suitable manner for determining proper temperature is to increase heat until film shrink begins, i.e., 2 to 5%, and then back off -15.0°C (5°F). For purposes of the present invention, web temperature is preferably approximately 76.7°C (170°F); although the printing process may run at a slightly higher drying temperature.

The rotogravure process uses a metal cylinder printing member into which the design to be printed has been etched. Rotogravure equipment resembles an in-line flexographic press in that it, too, requires an unwind, a printing section, a dryer, and a rewind. However, each color station has a dryer designed to dry one color completely.

A typical rotogravure color unit includes an impression roll, a printing (engraved) cylinder or roll, an ink supply, e.g. an ink pen or fountain, and a doctor blade. The printing cylinder rotates in the ink fountain, picking up excess ink. The doctor blade, which oscillates parallel to the axis of the printing cylinder to prevent accumulation of dirt behind the blade that can cause streaks, removes the excess, permitting ink to remain only in the cells of the engraved part of the roll, since the bottom of the cells are below the surface of the cylinder. The impression cylinder, which is rubber covered, squeezes the web to be printed against the engraved roll, causing the web to remove ink from the engraving as it leaves the nip, thus accomplishing transfer of ink from the printing cylinder to the moving web. In flexography, the printing is done by a molded rubber plate using a metal impression roll. In rotogravure, the printing plate is an engraved metal roll and the impression roll is rubber covered. A typical rotogravure press arrangement also includes two color stations, although eight color presses that can print several-tone cylinders and line cylinders, e.g., for type and can apply an overall high-gloss lacquer in-line are also typical. Rotogravure presses may also having flying splice unwinds with precise tension controls.

The process of using the novel polymer shrink films of the present invention to produce laminates which are applied to an article in accordance with the present invention has been discovered to overcome the previously mentioned disadvantages. In this regard, the present invention allows for a single printing operation to produce as many as four laminate variations. Also, shrinkable webs with different shrinkage properties can be laminated to a common printed shrinkable web to give laminates with different shrinkage properties tailored to the particular container or the requirements of the application. In addition, shrinkable webs of different shrinkage properties can also be laminated together to give a laminate whose shrinkage properties might be difficult to achieve using only a single film.

Related to the embodiment of the present invention which employs laminates, the heat shrinkable laminations may be composed of two or more polymer shrink films or heat shrinkable webs. Each polymer shrink film or web may function on its own as a heat shrinkable label or each web may be clear or opaque, metallized or non metallized, have similar or dissimilar surface character and shrinkage properties. In these embodiments, each web is preferably composed of polypropylene, a polypropylene copolymer or a blend of polypropylene, and a polypropylene copolymer. Each web is preferably biaxially oriented, providing high strength in all directions of the film plane, unlike uniaxially oriented films which are strong in the orientation direction but weak in the perpendicular direction.

The process according to the present invention may be further appreciated by reference to the following examples which are, of course, only representative of the present invention and in no way are meant to limit the present invention in any way to the particulars which are disclosed. Thus, the following are given merely as non-limiting examples to further explain the present invention.

### Example 1

### SEQUENTIAL BLOWN FILM PROCESS FOR MANUFACTURING SHRINK LABEL FILM

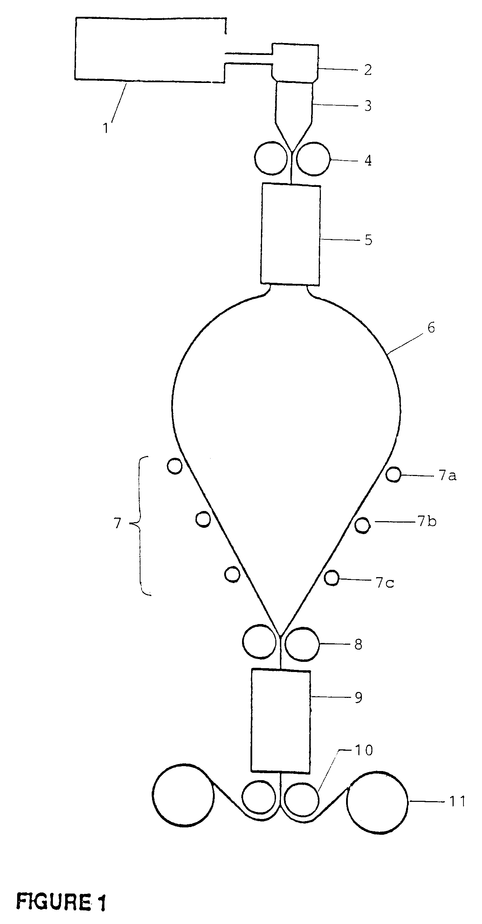

The manufacturing apparatus used in the sequential blown film process as shown in Figure 1 consists of an extruder system 1, a tubular die 2, a water bath quench system 3, a nip roll assembly 4, reheating oven 5, a single stage bubble blowing section 6 (where MD and TD draw occur), a convergence section 7 including convergence rolls (7a, 7b and 7c), and draw rolls 8, a heating oven 9 for altering shrinkage properties, draw rolls 10 and a mill roll winder 11.

The extrusion system 1 consists of an extruder with output capabilities of 181.44 kg/hr (400 lb/hr). The terminal end of the extruder has an annular die 2 which forms the melted polymer into a hollow polymer tube (six inches in diameter).

After the polymer tube has been extruded, it is quenched in a temperature controlled water bath 3. The tube continues through a nip 4 and into ovens 5 where the polymer tube is reheated. At this point, the tube is blown into a thin walled bubble 5. The controlled internal pressure in the polymer tube causes the hot tube to expand, drawing the film in the TD direction. A fast nip (with speed S1) draw rolls 8, located after a multi roll 7 v-shaped convergence section 7, causes the bubble to be drawn in the MD simultaneous with TD draw. The drawn film of width (W1) passes through a heating oven 9. The width is allowed to contract at the end of the oven (to W2), resulting in altered TD shrink properties. The film is pulled through the heating oven by a nip of draw rolls 10 located at the end of the oven. The speed at which the nip pulls the film through the oven is represented by S2. By controlling speeds S1 and S2, the MD shrinkage properties are altered. S2 speed can be greater than, equal to, or less than S1 depending upon the final shrink properties desired. The film is then wound onto a roll using a mill roll winder 11.

Table A illustrates that the 140°C MD/TD shrinkage ratio is between 25%/8% and 23%/5%. Example 1 demonstrates that film with desirable shrinkage properties can be produced using a sequential blown film process.

**TABLE A**

| CLEAR SHRINKABLE FILMS PRODUCED BY A SEQUENTIAL BLOWN FILM PROCESS | | | | | | | | | | | |
|---|---|---|---|---|---|---|---|---|---|---|---|
| Designation | Roll Speeds (ft/min)* | | Film Width (cm) | | | Oven Temp °C (°F) | Shrinkage, % | | | | Comments |
| | S1 | S2 | RS | W1 | W2 | | 140°C | | 120°C | | |
| | | | | | | | MD | TD | MD | TD | |
| A1 | 220 | 217 | 0.99 | 167 | 116 | (352) 178 | 23 | 5 | -- | -- | |
| A2 | 220 | 210 | 0.95 | 167 | 128.5 | (335) 168.5 | 22 | 10 | -- | -- | |
| Control | 220 | 198 | 0.90 | 167 | 153 | (288) 142 | 22 | 26 | -- | -- | Control |
| Conditions: Nominal Final Gauge: 96 RS = S1/S2 1 ft/min = 0.3048 m/min | | | | | | | | | | | |

### Example 2

### SEQUENTIAL TENTER FILM PROCESS FOR MANUFACTURING SHRINK LABEL FILM

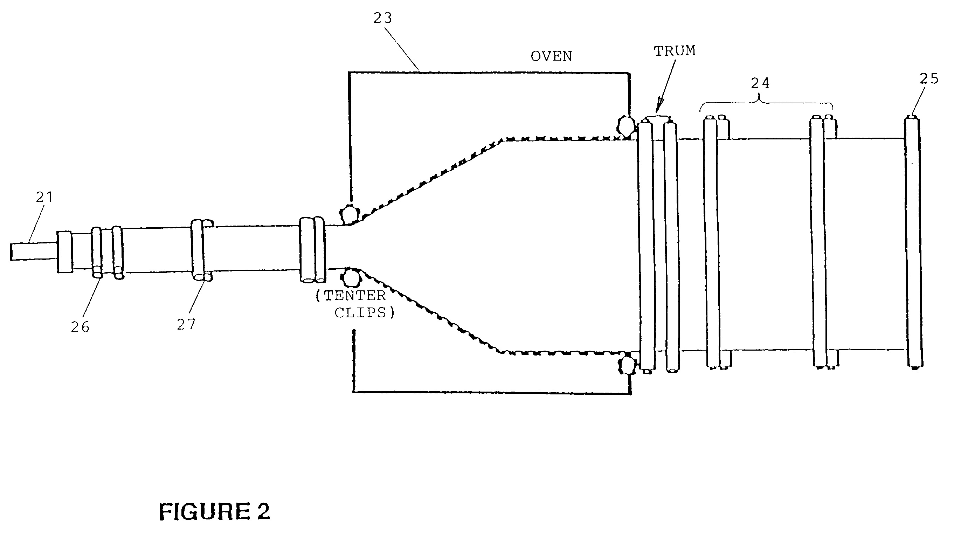

The manufacturing apparatus used for purposes of the present invention is illustrated schematically in Figure 2. It is composed of four extruders in an extruder and die section 21; a one/two stage MD draw section 22, a tenter oven 23, a post MD stretch unit 24 and a mill roll winder 25.

The extrusion system 21 is composed of one main extruder (60 kg/hr maximum output) and three satellite extruders (two with 12 kg/hr maximum output and one with a 6 kg/hr maximum output), not shown.

The casting unit of the one/two stage MD draw section 22 is composed of an air knife (not shown), a chrome casting roll 26, a water bath (not shown), and a dewatering air knife (not shown). The melt is laid on a chill roll (not shown), which brings one side of the casting into contact with a cold mirror chrome surface. Seconds later, the other side of the casting is introduced to the water bath. The casting drum or roll 26 is oil heated and cooled, allowing for rapid temperature change.

The forward draw unit 27 of the MD draw section 22 allows the film to travel around a dancer roll (not shown), six preheated rolls (not shown), around six draw rolls (not shown), four anneal (fast) rolls (not shown), and an exit dancer roll (not shown). By using circulating oil, all of the rolls are capable of heating and cooling.

The tenter oven 23 consists of six sections (not shown). Each section has a separate temperature control (not shown) and a fan (not shown) for air flow control. The oven has electrically heated air with a variable temperature range of 50°C to 250°C in any section. The maximum draw for any single section using a standard uniax width is seven times. By using two orientation sections, the tenter is capable of a ten times maximum draw. The oven is equipped with clip cooling, that enables draw at temperatures of over 200°C.

The tensilizer is an in-line post MD draw unit 24, which takes film directly from the tenter oven. The tensilizer consists of nine mirror chrome preheat rolls (not shown), one or two stage draw (not shown), and four chrome fast (anneal) rolls (not shown). The unit uses 180° wraps on the nine preheat rolls (not shown) to reduce slippage. The rolls are mounted alternately on two separate frames. The preheat rolls temperature is controlled in adjoining pairs. Infrared heating is an option at the point of draw.

Film is manufactured from the tandem configuration of a machine direction orientation (MDO)/transverse direction orientation (TDO)/secondary stage machine direction orientation unit. This OPP film is 32.51 µm (128 gauge) and 113.28 cm (44.6 inches) wide. The input shrinkages to the second stage MDO are 10% in the machine direction and 6% in the transverse direction. The tentered film is fed directly into the second stage machine direction orientation. Orientation was at 120°C with machine draw ratios (RS) between 1.40 to 1.70.

Table B illustrates the 140°C MD/TD shrinkage to be between 29%/0% and 33%/2%. This example demonstrates that film with desirable shrinkage properties can be produced by sequential tenter process.

**TABLE B**

| SHRINKABLE FILMS PRODUCED BY A SEQUENTIAL TENTER FILM PROCESS | | | | | |
|---|---|---|---|---|---|
| Designation | IR Heating % | Shrinkage, % | | | |
| | | Draw (RS) | Draw (RD) | 140°C MD | 140°C TD |
| B1 | 60 | 1.70 | 1.37 | 33 | 2 |
| B2 | 50 | 1.60 | 1.30 | 34 | 1 |
| B3 | 40 | 1.50 | 1.21 | 29 | 0 |
| B4 | 0 | 1.50 | 1.26 | 29 | 1 |
| Control | 0 | 1.00 | 1.00 | 10 | 6 |
| Terms: IR = infrared RS = run speed ratio (see definition of terms) RD = film draw ratio (see definition of terms) MD = machine direction TD = transverse direction Conditions: Preheat temperature - 120°C Nominal film width - (41 inches) 104.14 cm Tensilized nominal gauge - (110) 27.94 µm Nominal MD shrinkage at 100°C = 10.5 % | | | | | |

### Example 3

### OUT OF LINE PROCESS FOR MANUFACTURING SHRINK LABEL FILM

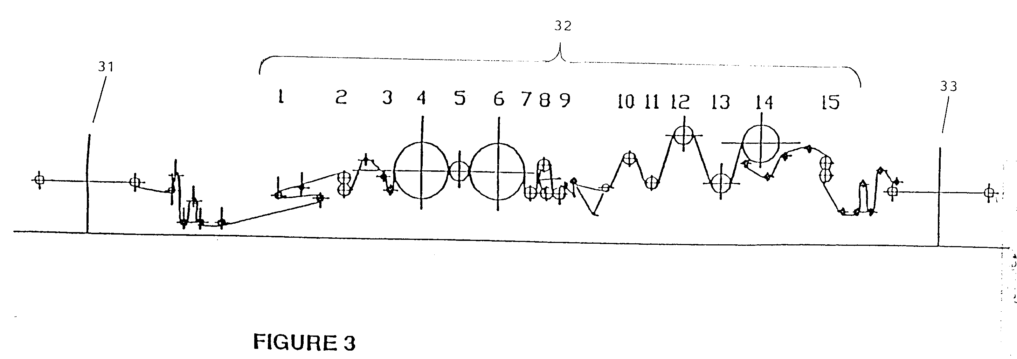

The manufacturing apparatus shown in Figure 3 consists of an unwind stand 31, 15 driven film rolls 32 (each with a variable speed and heating control), including a driven chill roll, and a winding stand 33. Biaxially oriented film to be converted into shrinkable film is loaded into the unwind stand 31. This film can be produced by any process; however, biaxially oriented films made by a tentering or a bubble process are generally used. The film can be clear or opaque and single layer or multilayer. The film is usually in the thickness range of 12.70 to 50.80 µm (50 to 200 gauge), most preferably 15.24 to 35.56 µm (60 to 140 nominal gauge).

After unwinding, the film passes from a feed section (three powered rollers - i.e., nos. 1-3) into a preheat section. This section of three powered rollers, i.e., nos. 4-6 contains two large diameter preheated rolls with a 180° wrap of film, to raise the incoming film to proper operating temperature. The film is then passed through a draw zone of five powered rolls, i.e., nos. 7-11, followed by a corona treatment zone with two powered, ceramic rolls, i.e., nos 12 and 13, then over large diameter chill roll no. 14 which reduces film temperature before windup, and finally, through an output nip (no. 15) before windup.

Powered roll speeds are increased from unwind to windup enabling the film to be drawn or tensilized in the machine or longitudinal direction. Roll speed of roll no. 1 at the entrance to the feed zone is nominally 243.8 m/min (800 feet/minute). Roll speed at the chill roll no. 14 varies from 304.8 to 457.2 m/min (1000 to 1500) feet/min depending on the amount of draw desired to be imparted to the film. The mean operating temperature of the process is usually between 90°C to 150°C with the chill roll temperature ranging from 15.6°C to 32.2°C (60°F to 90°F).

Clear films with moderate 140°C MD shrinkage (25%) and minimal 140°C TD shrinkage (3%) have been produced by this process (see Table C). Table C illustrates a range of shrinkable films with higher MD shrinkage (up to 32%) with low TD shrinkage (5%).

**TABLE C**

| CLEAR SHRINK FILMS PRODUCED BY AN OUT-OF-LINE ORIENTATION PROCESS OF BIAXIALLY ORIENTED OFF FILM | | | | | | | | | | |
|---|---|---|---|---|---|---|---|---|---|---|
| Designation | Gauge | Draw | | Process Temp, °C | Shrinkage, % | | | | | |
| | | RS | RD | | 140°C | | 120°C | | 100°C | |
| | | | | | MD | TD | MD | TD | MD | TD |
| C1 | 83 | 1.47 | 1.16 | 113 | 24 | 9 | 13 | -7 | 7 | -7 |
| C2 | 80 | 1.50 | 1.15 | 114 | 23 | 5 | 13 | -9 | 7 | -7 |
| Control | 77 | 1 | 1 | | 14 | 19 | 5 | 3 | 2 | -1 |
| C3 | 63 | 1.48 | 1.27 | 112 | 23 | 1 | 18 | -9 | -- | -- |
| Control | 65 | 1 | 1 | | 11 | 17 | 4 | 4 | -- | -- |
| C4 | 79 | 1.55 | 1.21 | 113 | 32 | 5 | 22 | -10 | -- | -- |
| Control | 74 | 1 | 1 | | 22 | 24 | 9 | 6 | -- | -- |
| C5 | 80 | 1.28 | 1.12 | 108 | 20 | 6 | 9 | -7 | 5 | -5 |
| Control | 77 | 1 | 1 | | 13 | 16 | 2 | -1 | -- | -- |

Opaque films, with moderate 140°C MD shrinkage (20%) have been produced by this process (see Table D). Another example in the same table illustrates an opaque shrinkable film higher MD shrinkage (33%) and lower TD shrinkage (-19%).

**TABLE D**

| OPAQUE SHRINK FILMS PRODUCED BY AN OUT-OF-LINE ORIENTATION PROCESS OF BIAXIALLY ORIENTED OPP | | | | | | | | | | |
|---|---|---|---|---|---|---|---|---|---|---|
| Designation | Gauge | Draw | | Process Temp, °C | Shrinkage, % | | | | | |
| | | RS | RD | | 140°C | | 120°C | | 100°C | |
| | | | | | MD | TD | MD | TD | MD | TD |
| D1 | 129 | 1.54 | 1.25 | 113 | 25 | -10 | 16 | -12 | 10 | -8 |
| D2 | 130 | 1.55 | 1.21 | 113 | 25 | -11 | 17 | -12 | 11 | -9 |
| Control | 132 | 1 | 1 | -- | 9 | 3 | 3 | -1 | 1 | -1 |
| D3 | 119 | 1.80 | 1.31 | 109 | 33 | -19 | 24 | -20 | 12 | -12 |
| Control | 124 | 1 | 1 | -- | 9 | 4 | 4 | -1 | -- | -- |
| D4 | 137 | 1.56 | 1.18 | 113 | 20 | -7 | 14 | -8 | 8 | -6 |
| Control | 139 | 1 | 1 | -- | 8 | 3 | 2 | -1 | -- | -- |
| D5 | 113 | 1.55 | | 112 | 27 | -9 | 19 | -13 | -- | -- |
| D6 | 128 | 1.55 | | 112 | 28 | -6 | 20 | -13 | -- | -- |

These thermal shrink properties are also in multilayer film laminates of clear/clear, clear/opaque, opaque/opaque or a metallized version of any combination. Table E lists several examples.

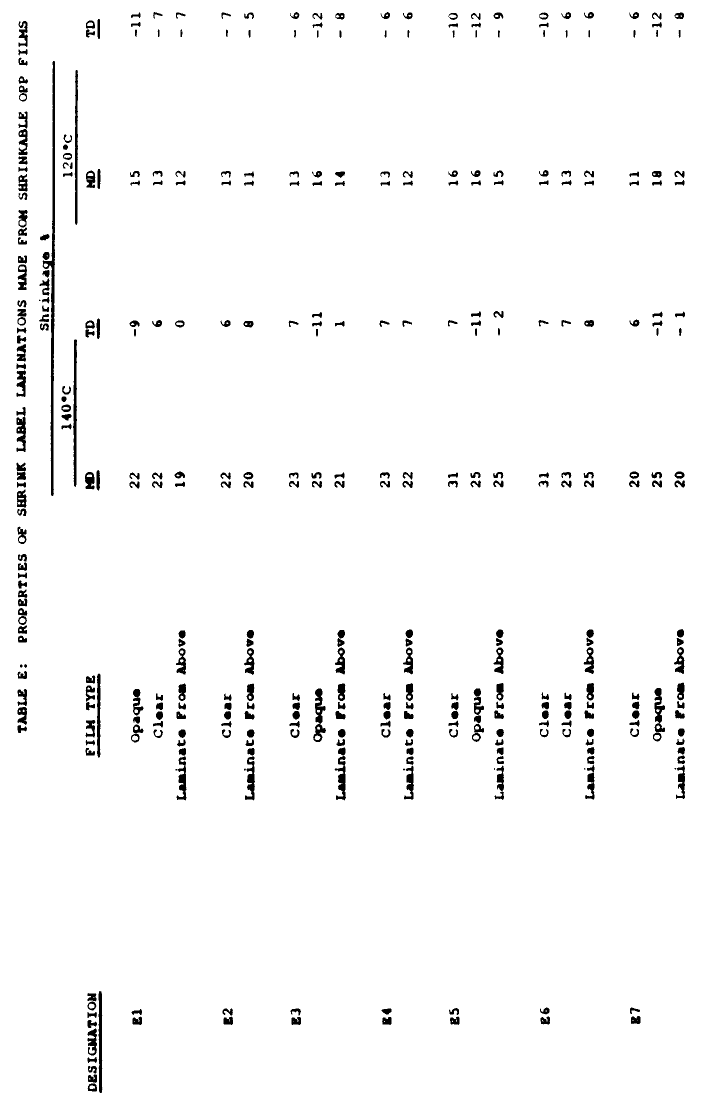

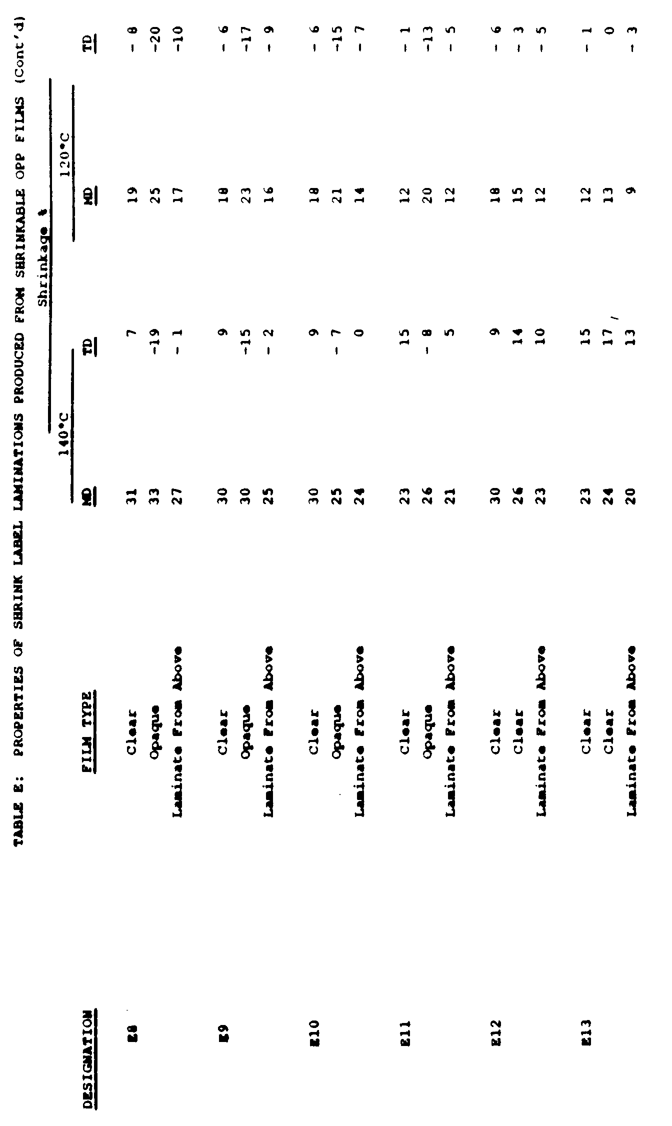

As used herein in connection with measured quantity, "roll speeds" are the machine speeds that are measured using a tachometer, wherein "S1" is input roll speed measured in ft/min; and "S2" is output roll speed measured in ft/min. "Film speeds" are the actual surface film speeds as measured by a tachometer, wherein "F1" is the input film speed measured in ft/min; and "F2" is the output film speed measured in ft/min. "T1" is input film thickness. "W1" is input film width. "T2" is output film thickness. "W2" is output film width. As used herein in connection with calculated ratios: "Run Speed Ratio" is RS = S2/S1; "Film Draw Ratio" is RD = T1xW1/(T2xW2). Also as used herein, MD mechanical draw is the ratio of output roll speed to input roll speed.

For purposes of the present invention, the input roll speed (S1) has a preferred range of 60.96 to 457.2 m/min (200 to 1500 ft/min) with a more preferred range of 228.6 to 259.1 m/min (750 to 850 ft/min) with most preferred range of 243.8 m/min (800 ft/min). The output roll speed (S2) has a preferred range of 61.26 to 457.5 m/min (201 to 1501 ft/min) with a more preferred range of 320.0 to 426.7 m/min (1050 to 1400 ft/min) and with a most preferred range of 335.3 to 396.2 m/min (1100 to 1300 ft/min). RD is calculated at a preferred range of 1.01 to 1.5 with a more preferred range of 1.1 to 1.37 and a most preferred range in clear film of 1.12 to 1.27 and 1.18 to 1.35 in opaque film. The preferred temperature range for imparting the desired shrink properties is 70°C to 160°C with a more preferred range of 90°C to 130°C and a most preferred range of 100°C to 120°C.

The preferred method of and means for heating the film is selected from the group consisting of heated rolls, hot air oven, and infrared oven. The more preferred method of heating the film is heated rolls and infrared ovens, with the most preferred method being heated rolls. The preferred number of draw gaps is between one and 12 with the more preferred number being between one and six.

The film thickness at S1 has a preferred range of 10.16 to 50.80 µm (40 to 200 gauge) with a more preferred gauge in clear film within the range of 15.24 to 27.94 µm (60 to 110 gauge) and in opaque film within the range of 22.86 to 35.56 µm (90 to 140 gauge). The most preferred gauge in clear film is within the range of 17.78 to 22.86 µm (70 to 90 gauge) and within the range of 30.48 to 35.56 µm (120 to 140 gauge) in opaque film.

The type of film anchorage during draw includes electrostatic pinning and nip rolls with both types being preferred. The film tension during draw has a preferred range of 141 kg/cm² to 703 kg/cm² (2000 psi to 10,000 psi).

### EXAMPLE 4

### LAMINATIONS OF SHRINK LABEL FILMS

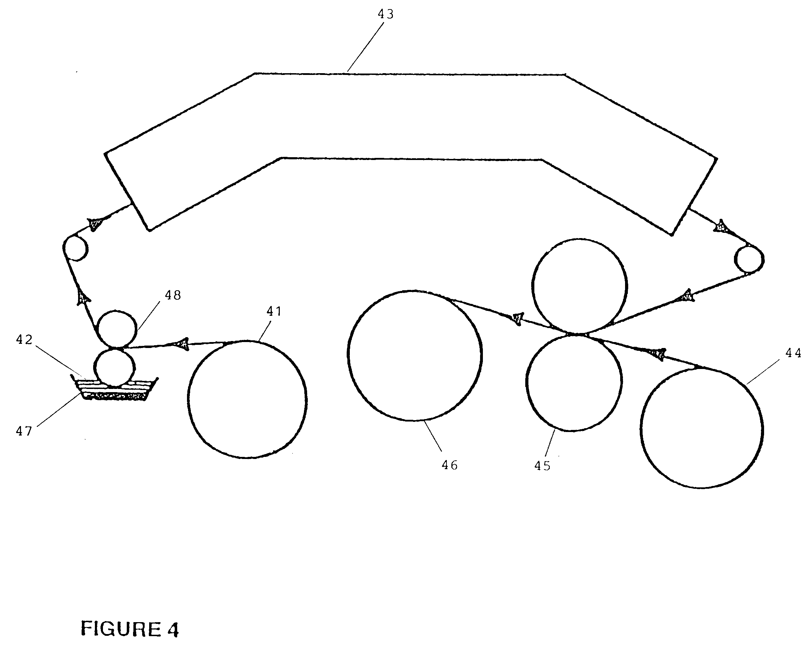

Reference is made to Figure 4, which schematically illustrates a film lamination process wherein a shrinkable label film lamination is prepared by coating one side of one roll of shrinkable label film 41 with an adhesive solution 42, evaporating the solvent in an oven 43, then bringing the coated side into contact with another roll of shrinkable label film 44 in a combining nip 45. The resulting roll of shrinkable label film lamination 46 is then wound up.

A 20 inch wide roll 41 of shrinkable label film is mounted in the primary unwind stand of a Faustel printer-coater-laminator. This film can be either clear or opaque shrinkable label film but is usually clear.

A thermosetting urethane adhesive, Morton Adcoat 333, is diluted with methyl ethyl ketone until a #2 Zahn cup viscosity of 17.5 is achieved. This adhesive solution 42 is placed into a reservoir 47 in contact with a 130 quad pattern gravure cylinder 48, chosen to deliver an adhesive coating weight of 317.5 to 680.4 g (0.7 to 1.5 lb)/ream to the shrinkable label film at 60.96 m/min (200 ft/min).

One side of the shrinkable label film is coated with the adhesive by direct gravure coating. If the film is caused to be opaque by containing voids, it is preferred that the side to be coated with adhesive consists of a thin, nonvoided skin.

Solvent is evaporated from the film coated with adhesive in a drying tunnel 43 maintained at 170°C to 180°C during a 3.5 second residence period. The tension in this film web is maintained at 133.9 g/cm (0.75 lb/linear inch).

A second roll 44 of 20 inch wide shrinkable label film is mounted in a secondary unwind stand. It can be either a clear or opaque, coated or metallized shrinkable label film. The tension of this film web is maintained at from about 178.6 to 223.2 g/cm (1 to 1.25 lb/linear inch).

The coated surface of the primary film is then brought in contact with one side of the second shrinkable label film roll under pressure in a combining nip 45. If the second film is caused to be opaque by containing voids, it is preferred that the side to be brought in contact with the adhesive coated side consist of a thin, nonvoided skin. The resulting laminated roll 46 is wound up on a winding stand.

The novel polyolefin shrink films in accordance with the present invention have been discovered to be particularly advantageous in labeling articles having irregular shapes. For purposes of the present invention, the article may be a straight-walled or contoured aluminum, steel, metal, plastic, glass, composite, or tubular or spiral wound cardboard container (especially a can or tin) for beverages (especially soda and beer), foods, or aerosols.

In this regard, either a single layer or laminate layers of novel polymer shrink films in accordance with the present invention is capable of being heat shrunk onto an article, such as a beverage can, the upper and bottom parts of which are tapered inwardly. The novel shrink films and laminates of novel shrink films in accordance with the present invention are particularly advantageous in labeling more modern beverage cans which taper inwardly at the upper and lower extremities so that a label must either avoid extending to these extremities or must conform closely to the shapes thereof: for example, in accordance with the procedures disclosed in U.S. Patent No. 4,844,957.

For purposes of this embodiment of the present invention, incoming packages are spaced by an infeed worm and transferred, via the infeed star, to a central rotary carousel. Here, firmly located between a base platform and overhead centering bell, they are caused to rotate about their own axes. As the label is withdrawn laterally from the magazine, it receives hot melt adhesives to provide the overlap bond. Continued rotation of the package past a short brushing section ensures a positive overlap seal. The fully labelled packages are then transferred, via the discharge star-wheel, to the down-stream conveyor.

The labeller is particularly useful for applying wrap-around labels made from shrinkable plastic film in which case, the overlap bond is achieved by the previously mentioned hot melt adhesive technique. The adhesive used is dependent upon the type of plastic film used. The plastic label is applied in the previously described otherwise conventional way by the labeller using the hot melt adhesive, and the size of the label is such that it extends (top and bottom) beyond the cylindrical portion of the bottle or can. After labelling, bottles or cans are passed through a heating sector to ensure the upper and lower label areas shrink tightly and uniformly to the bottle contours. For purposes of the present invention, it has been discovered that hot air preferably should be directed towards the top and bottom of the label or other specific area of the labelled container where a non-uniform contour is located to allow preferential shrinkage of the heat shrink labels in these areas.

In contrast to the present invention, none of the conventional labels or other known labels have been observed to be as suitable for labeling of irregularly shaped beverage containers, and other irregularly shaped articles, as contemplated in accordance with the present invention. For example, conventional labels have been observed to distort during the process of applying the same to irregular shaped articles, for example by heat shrinking. More importantly, however, such conventional labels, and particularly laminated labels, do not readily conform to the irregular shape of the article, for example, especially at the tapered extremes of beverage containers, such as cans.

Thus, in accordance with the present invention, an irregular shape article, such as a beverage container, which includes a cylindrical wall of metal, glass, or plastic and a top and a bottom on the wall, wherein the wall tapers inwardly adjacent to the top/bottom to form top and bottom tapered portion is provided with a heat shrinkable layer, or laminated layers of novel shrink film produced in accordance with the present invention, to encircle the wall and conform to the tapered portions, for example, as disclosed in U.S. Patent Nos. 4,704,173 and 4,844,957. Preferably, the label comprises first and second layers in laminated relationship.

Although the invention has been described with reference to particular means, materials and embodiments, from the foregoing, one skilled in the art can easily ascertain the essential characteristics of the present invention; and various changes and modifications may be made to various usages and conditions without departing from the scope of the invention as described in the claims that follow.

## Claims

1. A process for making a biaxially oriented polymer shrink film, said process comprising:
selecting a biaxially oriented polymer film including a polymer selected from the group consisting of polypropylene, polypropylene copolymers, and blends of polypropylene and polypropylene copolymers;
subjecting said biaxially oriented polymer film to processing conditions and temperatures effective to produce a biaxially oriented polymer shrink film having thermal shrink properties comprising shrinkage in the machine direction of said film and transverse direction of said film as a function of the MD orientation mechanical MD/TD draw ratio, said processing conditions including an MD reorientation mechanical MD/TD draw ratio between about 1.01 and about 7.5 and a corresponding line speed comprising an input roll speed (S1) within the range of about 60.96 m/min (200 ft/min) to about 457.2 m/min (1,500 ft/min) and an output roll speed (S2) within the range of about 61.26 m/min (201 ft/min) to about 457.5 m/min (1,501 ft/min), wherein the biaxially oriented polymer film has an imbalance of shrinkage consisting essentially of a machine direction (MD) shrinkage of greater than a transverse direction (TD) shrinkage such that TD is less than or equal to MD/2 and wherein the MD shrinkage is greater than about 15% and the TD shrinkage is less than about 10% at about 140°C.

2. The process of claim 1, wherein said MD reorientation mechanical MD/TD drain ratio is between about 1.10 and 2.00 and the corresponding input roll speed (S1) is within the range of about 228.6 m/min (750 ft/min) to about 259.1 m/min (850 ft/min), and said output roll speed (S2) is within the range of about 285 m/min (935 ft/min) to about 457.2 m/min (1500 ft/min).

3. The process of Claim 1, wherein said temperature is within the range of about 70°C to about 180°C.

4. The process of Claim 1, wherein said biaxially oriented polymer shrink film exhibits tensile properties selected from group consisting of:
Modulus
MD, kg/cm² (psi) 24.6x10³ - 59.8x10³ (350,000-850,000)
TD, kg/cm² (psi) 7.03x10³ - 35.2x10³ (100,000-500,000)
Tensile Strength
MD, kg/cm² (psi) 2.11x10³ - 3.52x10³ (30,000-50,000)
TD, kg/cm² (psi) 1.05x10³ - 2.46x10³ (15,000-35,000)
Ultimate Elongation
MD, % 20-120
TD, % 50-250

5. The process of Claim 1, wherein the biaxially oriented polymer film that is selected is a polypropylene film.

6. The process of Claim 1, wherein said biaxially oriented polymer film comprises a member selected from the group consisting of a single layer of biaxially oriented film and multilayers of biaxially oriented film.

7. The process as defined by Claim 1, wherein said biaxially oriented polymer film is selected from the group consisting of monolayer films, multilayer films, coextruded films, extrusion coated films, and coated films.

8. The process of Claim 1, wherein said biaxially oriented polymer film has a thickness within the range of about 50 to about 200 gauge.

9. A shrink film comprising:
a biaxially oriented polymer film including a polymer selected from the group consisting of polypropylene, polypropylene copolymers, and blends of polypropylene and polypropylene copolymers, said film having an imbalance of shrinkage consisting essentially of a machine direction (MD) shrinkage of greater than a transverse direction (TD) shrinkage such that TD is less than or equal to MD/2 and wherein the MD shrinkage is greater than about 15% and the TD shrinkage is less than about 10% at about 140°C.

10. The shrink film of Claim 9, wherein said polymer is polypropylene.

11. The shrink film of Claim 9, wherein said biaxially oriented film exhibits tensile properties selected from the group consisting of:
Modulus
MD, kg/cm² (psi) 24.6x10³ - 59.8x10³ (350,000-850,000)
TD, kg/cm² (psi) 7.03x10³ - 35.2x10³ (100,000-500,000)
Tensile Strength
MD, kg/cm² (psi) 2.11x10³ - 3.52x10³ (30,000-50,000)
TD, kg/cm² (psi) 1.05x10³ - 2.46x10³ (15,000-35,000)
Ultimate Elongation
MD, % 20-120
TD, % 50-250

12. The shrink film of Claim 9, wherein said biaxially oriented polymer film is selected from the group consisting of monolayer films, multilayer films, coextruded films, extrusion coated films and coated films.

13. The shrink film of Claim 9, wherein said biaxially oriented polymer film has a thickness within the range of about 50 to about 200 gauge.

14. A process for making a biaxially oriented shrink film comprising:
a) selecting a biaxially oriented polymer film including a polymer selected from the group consisting of polypropylene, polypropylene copolymers, and blends of polypropylene and polypropylene copolymers;
b) heating the biaxially oriented film to a temperature within the range of 100°C to about 180°C;
c) drawing the heated biaxially oriented film under conditions effective to extend the heated biaxially oriented film by at least 1.10 times the original length of said biaxially oriented film in the machine direction; and
d) cooling the drawn film while said drawn film is under tension, whereby a shrink film is produced having thermal shrinkage properties which are a function of temperature.

15. The process of claim 14, wherein the biaxially oriented polymer film that is selected is a polypropylene film.

16. The process of Claim 14, wherein said temperature is within the range of about 70°C to about 180°C.

17. The process of Claim 16, wherein said conditions comprise a balance of line speed and temperature to produce in said biaxially oriented polymer shrink film machine direction shrinkage of greater than about 15% and a transverse direction shrinkage of less than about 10% at about 140°.

18. The process of Claim 17, wherein said biaxially oriented polymer shrink film exhibits tensile properties selected from the group consisting of:
Modulus
MD, kg/cm² (psi) 24.6x10³ - 59.8x10³ (350,000-850,000)
TD, kg/cm² (psi) 7.03x10³ - 35.2x10³ (100,000-500,000)
Tensile Strength
MD, kg/cm² (psi) 2.11x10³ - 3.52x10³ (30,000-50,000)
TD, kg/cm² (psi) 1.05x10³ - 2.46x10³ (15,000-35,000)
Ultimate Elongation
MD, % 20-120
TD, % 50-250

19. A shrink film laminate comprising:
at least one biaxially oriented polymer film including a polymer selected from the group consisting of polypropylene, polypropylene copolymers, and blends of polypropylene and polypropylene copolymers, said film having an imbalance of shrinkage consisting essentially of a machine, direction (MD) shrinkage of greater than a transverse direction (TD) shrinkage such that TD is less than or equal to MD/2 and wherein the MD shrinkage is greater than about 15% and the TD shrinkage is less than about 5% at about 140°C.

20. The shrink film laminate of Claim 19, wherein the polymer is polypropylene.

21. The shrink laminate of Claim 19, wherein said biaxially oriented film exhibits tensile properties selected from the group consisting of
Modulus
MD, kg/cm² (psi) 24.6x10³ - 59.8x10³ (350,000-850,000)
TD, kg/cm² (psi) 7.03x10³ - 35.2x10³ (100,000-500,000)
Tensile Strength
MD, kg/cm² (psi) 2.11x10³ - 3.52x10³ (30,000-50,000)
TD, kg/cm² (psi) 1.05x10³ - 2.46x10³ (15,000-35,000)
Ultimate Elongation
MD, % 20-120
TD, % 50-250

22. The shrinkage film laminate of Claim 19, wherein at least one of said biaxially oriented polymer film has an MD reorientation MD/TD mechanical draw ratio within the range of about 1.1 to 1.37.

23. The shrink film laminate of Claim 19, wherein said laminate comprises at least two layers of said biaxially oriented polymer film.

24. The use of a biaxially oriented polymer shrink film produced by the process of any one of Claims 1 - 8, or 14 - 18, combining covering a portion of an article with said biaxially oriented polymer shrink film and subjecting said covered article to heat at a temperature sufficient to shrink said biaxially oriented polymer film around at least a portion of said article.

## Patentansprüche

1. Verfahren zur Herstellung eines biaxial orientierten Polymerschrumpffilmes durch
Auswahl eines biaxial orientierten Polymerfilms einschließlich eines aus Polypropylen, Polypropylen-Copolymeren und Mischungen von Polypropylen- und Polypropylen-Copolymeren ausgewählten Polymers,
Unterwerten des biaxial orientierten Polymerfilms den Verarbeitungsbedingungen und Temperaturen, die nötig sind, um einen biaxial orientierten Polymerschrumpffilm mit thermischen Schrumpfeigenschaften herzustellen, enthaltend die Schrumpfung in der Maschinenrichtung des Films und in der Querrichtung des Films als eine Funktion der mechanischen MD-Orientierung des MD/TD-Streckverhältnisses, wobei die Verarbeitungsbedingungen eine mechanische MD-Reorientierung des MD/TD-Streckverhältnisses zwischen etwa 1,01 und 7,5 und eine entsprechende Liniengeschwindigkeit mit einer Eingabewalzgeschwindigkeit (S1) im Bereich von etwa 60,96 m/min (200 ft/min) bis etwa 457,2 m/min (1500 ft/min) und eine Ausgabewalzgeschwindigkeit (S2) im Bereich von etwa 61,26 m/min (201 ft/min) bis etwa 457,5 m/min (1501 ft/min) einschließen, worin der biaxial orientierte Polymerfilm eine im wesentlichen aus einer Maschinenrichtung (MD) -Schrumpfung von mehr als einer Querrichtung (TD) -Schrumpfung bestehendes Schrumpfungsungleichgewicht hat, so daß die TD weniger als oder gleich der MD/2 ist und worin die MD-Schrumpfung größer als etwa 15 % und die TD-Schrumpfung weniger als etwa 10 % bei etwa 140° C sind.

2. Verfahren nach Anspruch 1, worin die mechanische MD-Reorientierung des MD/TD-Streckverhältnisses zwischen etwa 1,10 und 2,00 und die entsprechende Eingabewalzgeschwindigkeit (S1) innerhalb des Bereichs von 228,6 m/min (750 ft/min) bis etwa 259,1 m/min (850 ft/min) und die Ausgabewalzgeschwindigkeit (S2) innerhalb des Bereichs von etwa 285 m/min (935 ft/min) bis etwa 457,2 m/min (1500 ft/min) sind.

3. Verfahren nach Anspruch 1, worin die Temperatur im Bereich von etwa 70°C bis etwa 180°C ist.

4. Verfahren nach Anspruch 1, worin der biaxial orientierte Polymerschrumpffilm die aus der Gruppe bestehend aus
Modul
MD, kg/cm² (psi) 24,6x10³ - 59,8x10³ (350 000-850 000)
TD, kg/cm² (psi) 7,03x10³ - 35,2x10³ (100 000-500 000),
Zugfestigkeit
MD, kg/cm² (psi) 2,11x10³ - 3,52x10³ (30 000-50 000)
TD, kg/cm² (psi) 1,05x10³ - 2,46x10³ (15 000-35 000),
Bruchdehnung
MD, % 20-120
TD, % 50-250
ausgewählten Festigkeitseigenschaften zeigt.

5. Verfahren nach Anspruch 1, worin der biaxial orientierte Polymerfilm aus einem Polypropylenfilm ausgewählt ist.

6. Verfahren nach Anspruch 1, worin der biaxial orientierte Polymerfilm einen Bestandteil aufweist, der aus einer einzigen Schicht des biaxial orientierten Films und vielen Schichten des biaxial orientierten Films ausgewählt ist.

7. Verfahren nach Anspruch 1, worin der biaxial orientierte Polymerfilm aus Monolagenfilmen, Viellagenfilmen, co-extrudierten Filmen, extrusionsbeschichteten Filmen und beschichteten Filmen ausgewählt ist.

8. Verfahren nach Anspruch 1, worin der biaxialorientierte Polymerfilm eine Dicke im Bereich von etwa 50 bis etwa 200 gauge hat.

9. Schrumpffilm enthaltend
einen biaxial orientierten Polymerfilm einschließlich eines aus Polypropylen, Polypropylen-Copolymeren und Mischungen von Polypropylen und Polypropylen-Copolymeren ausgewählten Polymers, wobei der Film ein im wesentlichen aus einer Maschinenrichtung (MD)-Schrumpfung von mehr als einer Querrichtung (TD)-Schrumpfung bestehendes Schrumpfungsungleichgewicht hat, so daß die TD weniger als oder gleich der MD/2 und die MD-Schrumpfung größer als etwa 15 % und die TD-Schrumpfung weniger als etwa 10 % bei etwa 140 °C sind.

10. Schrumpffilm nach Anspruch 9, worin das Polymer Polypropylen ist.

11. Schrumpffilm nach Anspruch 9, worin der biaxial orientierte Polymerschrumpffilm die aus der Gruppe bestehend aus
Modul
MD, kg/cm² (psi) 24,6x10³ - 59,8x10³ (350 000-850 000)
TD, kg/cm² (psi) 7,03x10³ - 35,2x10³ (100 000-500 000),
Zugfestigkeit
MD, kg/cm² (psi) 2,11x10³ - 3,52x10³ (30 000-50 000)
TD, kg/cm² (psi) 1,05x10³ - 2,46x10³ (15 000-35 000),
Bruchdehnung
MD, % 20-120
TD, % 50-250
ausgewählten Festigkeitseigenschaften zeigt.

12. Schrumpffilm nach Anspruch 9, worin der biaxial orientierte Polymerfilm aus Monolagenfilmen, Viellagenfilmen, co-extrudierten Filmen, extrusionsbeschichteten Filmen und beschichteten Filmen ausgewählt ist.

13. Schrumpffilm nach Anspruch 9, worin der biaxial orientierte Polymerfilm eine Dicke im Bereich von etwa 50 bis etwa 200 gauge hat.

14. Verfahren zur Herstellung eines biaxial orientierten Schrumpffilms durch
a) Auswahl eines biaxial orientierten Polymerfilms einschließlich eines aus Polypropylen, Polypropylen-Copolymeren und Mischungen von Polypropylen und Polypropylen-Copolymeren ausgewählten Polymers,
b) Erwärmung des biaxial orientierten Films auf eine Temperatur innerhalb des Bereichs von 100 °C bis etwa 180 °C,
c) Strecken des erwärmten, biaxial orientierten Films unter Bedingungen, die wirksam sind, den erwärmten biaxial orientierten Film auf das zumindest 1,10-fache der ursprünglichen Länge des biaxial orientierten Films in der Maschinenrichtung zu dehnen, und
d) Abkühlen des gestreckten Films, während der gestreckte Film unter Zug gehalten wird, wobei ein Schrumpffilm mit thermischen Schrumpfeigenschaften hergestellt wird, die eine Funktion der Temperatur sind.

15. Verfahren nach Anspruch 14, worin der biaxial orientierte Polymerfilm aus einem Polypropylenfilm ausgewählt ist.

16. Verfahren nach Anspruch 14, worin die Temperatur innerhalb des Bereichs von etwa 70 °C bis etwa 180 °C ist.

17. Verfahren nach Anspruch 16, worin die Bedingungen ein Gleichgewicht der Liniengeschwindigkeit und der Temperatur umfassen, um in dem biaxial orientierten Polymerschrumpffilm eine Maschinenrichtungsschrumpfung von mehr als etwa 15 % und eine Querrichtungsschrumpfung von weniger als etwa 10 % bei etwa 140 °C zu erzeugen.

18. Verfahren nach Anspruch 17, worin der biaxial orientierten Polymerschrumpffilm die aus der Gruppe bestehend aus
Modul
MD, kg/cm² (psi) 24,6x10³ - 59,8x10³ (350 000-850 000)
TD, kg/cm² (psi) 7,03x10³ - 35,2x10³ (100 000-500 000),
Zugfestigkeit
MD, kg/cm² (psi) 2,11x10³ - 3,52x10³ (30 000-50 000)
TD, kg/cm² (psi) 1,05x10³ - 2,46x10³ (15 000-35 000),
Bruchdehnung
MD, % 20-120
TD, % 50-250
ausgewählten Festigkeitseigenschaften zeigt.

19. Schrumpffilmlaminat mit
zumindest einem biaxial orientierten Polymerfilm einschließlich eines aus Polypropylen, Polypropylen-Copolymeren und Mischungen von Polypropylen und Polypropylen-Copolymeren ausgewählten Polymers, wobei der Film ein im wesentlichen aus einer Maschinenrichtung (MD)-Schrumpfung von mehr als einer Querrichtung (TD)-Schrumpfung bestehendes Schrumpfungsungleichgewicht hat, so daß die TD weniger als oder gleich der MD/2 und die MD-Schrumpfung größer als etwa 15 % und die TD-Schrumpfung weniger als etwa 10 % bei etwa 140 °C sind.

20. Schrumpffilmlaminat nach Anspruch 19, worin das Polymer Polypropylen ist.

21. Schrumpffilmlaminat nach Anspruch 19, worin der biaxial orientierten Polymerschrumpffilm die aus der Gruppe bestehend aus
Modul
MD, kg/cm² (psi) 24,6x103 - 59,8x10³ (350 000-850 000)
TD, kg/cm² (psi) 7,03x10³ - 35,2x10³ (100 000-500 000),
Zugfestigkeit
MD, kg/cm² (psi) 2,11x10³ - 3,52x10³ (30 000-50 000)
TD, kg/cm² (psi) 1,05x10³ - 2,46x10³ (15 000-35 000),
Bruchdehnung
MD, % 20-120
TD, % 50-250
ausgewählten Festigkeitseigenschaften zeigt.

22. Schrumpffilmlaminat nach Anspruch 19, worin zumindest einer der biaxial orientierten Polymerfilme eine mechanische MD-Reorientierung des MD/TD-Streckverhältnisses innerhalb des Bereichs von etwa 1,1 bis 1,37 hat.

23. Schrumpffilmlaminat nach Anspruch 19, worin das Laminat zumindest zwei Schichten des biaxial orientierten Polymerfilms aufweist.

24. Verwendung eines durch das Verfahren nach einem der Ansprüche 1 bis 8 oder 14 bis 18 hergestellten biaxial orientierten Polymerschrumpffilmes durch Kombinieren des Überziehens eines Bereichs eines Gegenstandes mit dem biaxial orientierten Polymerschrumpffilm und Unterwerfen des überzogenen Gegenstands der Wärme bei einer ausreichenden Temperatur, um den biaxial orientierten Polymerfilm um zumindest einen Bereich des Gegenstandes zu schrumpfen.

## Revendications

1. Un procédé pour réaliser un film rétractable de polymère à orientation biaxiale, ledit procédé comprenant les opérations consistant à :
choisir un film de polymère à orientation biaxiale comprenant un polymère choisi dans le groupe se composant du polypropylène, des copolymères de polypropylène et des mélanges de polypropylène et de copolymères de polypropylène ;
soumettre ledit film de polymère à orientation biaxiale à des conditions et à des températures de traitement efficaces pour produire un film rétractable de polymère à orientation biaxiale présentant des propriétés de retrait thermique comprenant une contraction dans la direction machine dudit film et dans la direction transversale dudit film en fonction du rapport d'étirage DM/DT mécanique d'orientation DM, lesdites conditions de traitement comprenant un rapport d'étirage DM/DT mécanique de réorientation DM entre environ 1,01 et environ 7,5 et une vitesse linéaire correspondante comprenant une vitesse de rouleau d'entrée (S1) à l'intérieur de la gamme d'environ 60,96 m/min (200 pieds/min) à environ 457,2 m/min (1500 pieds/min) et une vitesse de rouleau de sortie (S2) à l'intérieur de la gamme d'environ 61,26 m/min (201 pieds/min) à environ 457,5 m/min (1501 pieds/min), dans lequel le film de polymère à orientation biaxiale présente un déséquilibre de contraction se composant essentiellement d'une contraction de direction machine (DM) supérieure à une contraction de direction transversale (DT) telle que DT est inférieure ou égale à DM/2 et dans lequel la contraction DM est supérieure à environ 15% et la contraction DT est inférieure à environ 10% à environ 140°C.

2. Le procédé de la revendication 1, dans lequel le rapport d'étirage DM/DT mécanique de réorientation DM est entre environ 1,10 et 2,00 et la vitesse correspondante de rouleau d'entrée (S1) est à l'intérieur de la gamme d'environ 226,6 m/min (750 pieds/min) à environ 259,1 m/min (850 pieds/min), et ladite vitesse de rouleau de sortie (S2) est à l'intérieur de la gamme d'environ 285 m/min (935 pieds/min) à environ 457,2 m/min (1500 pieds/min).

3. Le procédé de la revendication 1, dans lequel ladite température est à l'intérieur de la gamme d'environ 70°C à environ 180°C.

4. Le procédé de la revendication 1, dans lequel ledit film rétractable de polymère à orientation biaxiale présente des propriétés de traction choisies dans le groupe se composant de :
Module
DM, kg/cm² (psi) 24,6x10³ - 59,8x10³ (350 000-850 000)
DT, kg/cm² (psi) 7,03x10³ - 35,2x10³ (100 000-500 000)
Résistance à la traction
DM, kg/cm² (psi) 2,11x10³ - 3,52x10³ (30 000-50 000)
DT, kg/cm² (psi) 1,05x10³ - 2,46x10³ (15 000-35 000)
Allongement maximum
DM, % 20-120
DT, % 50-250

5. Le procédé de la revendication 1, dans lequel le film de polymère à orientation biaxiale qui est choisi est un film de polypropylène.

6. Le procédé de la revendication 1, dans lequel ledit film de polymère à orientation biaxiale comprend un élément choisi dans le groupe se composant d'une couche unique de film à orientation biaxiale et de plusieurs couches de films à orientation biaxiale.

7. Le procédé tel que défini à la revendication 1, dans lequel ledit film de polymère à orientation biaxiale est choisi dans le groupe se composant de films à une seule couche, de films à plusieurs couches, de films co-extrudés, de films revêtus par extrusion et de films revêtus.

8. Le procédé de la revendication 1, dans lequel ledit film de polymère à orientation biaxiale présente une épaisseur à l'intérieur de la gamme d'environ 50 à environ 200 unités d'épaisseur.

9. Un film rétractable comprenant :
un film de polymère à orientation biaxiale comportant un polymère choisi dans le groupe se composant du polypropylène, des copolymères de polypropylène et des mélanges de polypropylène et de copolymères de polypropylène, ledit film présentant un déséquilibre de contraction se composant essentiellement d'une contraction de direction machine (DM) supérieure à une contraction de direction transversale (DT) telle que DT est inférieure ou égale à DM/2 et dans lequel la contraction DM est supérieure à environ 15% et la contraction DT est inférieure à environ 10% à environ 140°C.

10. Le film rétractable de la revendication 9, dans lequel ledit polymère est le polypropylène.

11. Le film rétractable de la revendication 9, dans lequel ledit film à orientation biaxiale présente des propriétés de traction choisies dans le groupe se composant de :
Module
DM, kg/cm² (psi) 24,6x10³ - 59,8x10³ (350 000-850 000)
DT, kg/cm² (psi) 7,03x10³ - 35,2x10³ (100 000-500 000)
Résistance à la traction
DM, kg/cm² (psi) 2,11x10³ - 3,52x10³ (30 000-50 000)
DT, kg/cm² (psi) 1,05x10³ - 2,46x10³ (15 000-35 000)
Allongement maximum
DM, % 20-120
DT, % 50-250

12. Le film rétractable de la revendication 9, dans lequel ledit film polymère à orientation biaxiale est choisi dans le groupe se composant de films à une seule couche, de films à plusieurs couches, de films co-extrudés, de films revêtus par extrusion et de films revêtus.

13. Le film rétractable de la revendication 9, dans lequel ledit film polymère à orientation biaxiale présente une épaisseur à l'intérieur de la gamme d'environ 50 à environ 200 unités d'épaisseur.

14. Un procédé pour réaliser un film rétractable à orientation biaxiale comprenant les opérations consistant à :
a) choisir un film polymère à orientation biaxiale comprenant un polymère choisi dans le groupe se composant du polypropylène, des copolymères de polypropylène et des mélanges de polypropylène et de copolymères de polypropylène
b) chauffer le film à orientation biaxiale à une température à l'intérieur de la gamme de 100°C à environ 180°C ;
c) étirer le film chauffé à orientation biaxiale sous des conditions efficaces pour étendre le film chauffé à orientation biaxiale d'au moins 1,10 fois la longueur d'origine dudit film à orientation biaxiale dans la direction machine ; et
d) refroidir le film étiré alors que ledit film étiré est sous tension, de sorte qu'il est produit un film rétractable présentant des propriétés de contraction thermique qui sont fonction de la température.

15. Le procédé de la revendication 14, dans lequel le film polymère à orientation biaxiale qui est choisi est un film de polypropylène.

16. Le procédé de la revendication 14, dans lequel ladite température est à l'intérieur de la gamme d'environ 70°C à environ 180°C.

17. Le procédé de la revendication 16, dans lequel lesdites conditions comprennent un équilibre de vitesse linéaire et de température pour produire, dans ledit film rétractable de polymère à orientation biaxiale, une contraction de direction machine supérieure à environ 15% et une contraction de direction transversale inférieure à environ 10% à environ 140°.

18. Le procédé de la revendication 17, dans lequel ledit film rétractable de polymère à orientation biaxiale présente des propriétés de traction choisies dans le groupe se composant de :
Module
DM, kg/cm² (psi) 24,6x10³ - 59,8x10³ (350 000-850 000)
DT, kg/cm² (psi) 7,03x10³ - 35,2x10³ (100 000-500 000)
Résistance à la traction
DM, kg/cm² (psi) 2,11x10³ - 3,52x10³ (30 000-50 000)
DT, kg/cm² (psi) 1,05x10³ - 2,46x10³ (15 000-35 000)
Allongement maximum
DM, % 20-120
DT, % 50-250

19. Un stratifié de film rétractable comprenant :
au moins un film de polymère à orientation biaxiale comprenant un polymère choisi dans le groupe se composant du polypropylène, des copolymères de polypropylène et des mélanges de polypropylène et de copolymères de polypropylène, ledit film présentant un déséquilibre de contraction se composant essentiellement d'une contraction de direction machine (DM) supérieure à une contraction de direction transversale (DT) telle que DT est inférieure ou égale à DM/2 et dans lequel la contraction DM est supérieure à environ 15% et la contraction DT est inférieure à environ 5% à environ 140°C.

20. Le stratifié de film rétractable de la revendication 19, dans lequel le polymère est le polypropylène.

21. Le stratifié rétractable de la revendication 19, dans lequel ledit film à orientation biaxiale présente des propriétés de traction choisies dans le groupe se composant de :
Module
DM, kg/cm² (psi) 24,6x10³ - 59,8x10³ (350 000-850 000)
DT, kg/cm² (psi) 7,03x10³ - 35,2x10³ (100 000-500 000)
Résistance à la traction
DM, kg/cm² (psi) 2,11x10³ - 3,52x10³ (30 000-50 000)
DT, kg/cm² (psi) 1,05x10³ - 2,46x10³ (15 000-35 000)
Allongement maximum
DM, % 20-120
DT, % 50-250

22. Le stratifié de film rétractable de la revendication 19, dans lequel au moins un desdits films de polymère à orientation biaxiale présente un rapport d'étirage mécanique DM/DT de réorientation DM à l'intérieur de la gamme d'environ 1,1 à 1,37.

23. Le stratifié de film rétractable de la revendication 19, dans lequel ledit stratifié comprend au moins deux couches de films polymères à orientation biaxiale.

24. L'utilisation d'un film rétractable de polymère à orientation biaxiale fabriqué par le procédé d'une quelconque des revendications 1 à 8, ou 14 à 18, combinant le fait de recouvrir une partie d'un objet avec ledit film rétractable de polymère à orientation biaxiale et de soumettre ledit objet recouvert à de la chaleur à une température suffisante pour contracter ledit film de polymère à orientation biaxiale autour d'au moins une partie dudit objet.
